(19) Europäisches Patentamt
European Patent Office
Office européen des brevets

(11) EP 2 544 011 B1

(12) **FASCICULE DE BREVET EUROPEEN**

(45) Date de publication et mention de la délivrance du brevet:
**19.08.2015 Bulletin 2015/34**

(51) Int Cl.:
*G01P 15/097* (2006.01)    *G01L 9/00* (2006.01)
*G01C 19/5642* (2012.01)    *G01C 19/5635* (2012.01)
*G01C 19/5607* (2012.01)    *G01C 19/5776* (2012.01)

(21) Numéro de dépôt: **12174576.4**

(22) Date de dépôt: **02.07.2012**

(54) **Micro-systeme vibrant a boucle de controle automatique de gain, a controle integre du facteur de qualite**

Schwingendes Mikrosystem mit einer Schleife zur automatischen Verstärkungskontrolle mit integrierter Kontrolle des Qualitätsfaktors

Vibrating micro-system with automatic gain-control loop, with built-in monitoring of the quality factor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2011 FR 1102157**

(43) Date de publication de la demande:
**09.01.2013 Bulletin 2013/02**

(73) Titulaire: **Thales**
**92400 Courbevoie (FR)**

(72) Inventeurs:
• **Quer, Régis**
  **07130 SAINT PERAY (FR)**
• **Simoens, Sébastien**
  **69008 LYON (FR)**
• **Lefort, Pierre-Olivier**
  **26000 VALENCE (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 888 929**

• **HERVÉ MATHIAS ET AL: "Architecture for integrated mems resonators quality factor measurement", DTIP OF MEMS & MOEMS : DESIGN, TEST, INTEGRATION AND PACKAGING OF MEMS/MOEMS 2007 : [SYMPOSIUM ON DESIGN, TEST, INTEGRATION AND PACKAGING OF MEMS/MOEMS], EDA PUBL, GRENOBLE, FRANCE; STRESA, LAGO MAGGI , 1 janvier 2007 (2007-01-01), pages 1-5, XP008148956, ISBN: 978-2-35500-000-3 Extrait de l'Internet: URL:http://arxiv.org/ftp/arxiv/papers/0802 /0802.3767.pdf [extrait le 2012-02-15]**
• **ZHANG M ET AL: "CMOS offset-free circuit for resonator quality factor measurement", THE INSTITUTION OF ENGINEERING AND TECHNOLOGY. JOURNAL,, vol. 46, no. 10, 13 mai 2010 (2010-05-13), pages 706-707, XP006035556, ISSN: 1350-911X, DOI: 10.1049/EL:20100520**

**Description**

Le domaine de l'invention est celui des micro-systèmes vibrants, et notamment mais non exclusivement les micro-capteurs, dont le principe de mesure est basé sur la fréquence d'oscillations d'un système mécanique oscillant, à poutre(s) ou membrane(s), formé au moyen de structures électromécaniques micro-usinées dites MEMS.

L'invention s'applique plus particulièrement aux capteurs de précision, tels ceux embarqués dans des aéronefs et utilisés pour le guidage ou l'aide au pilotage, fournissant des indications, de pression, accélération ou vitesse angulaire. Ces capteurs doivent fournir une mesure dont la précision doit être connue à chaque instant, car ils servent à des fonctions critiques ou essentielles pour la sécurité ou la mission de l'aéronef. Un des paramètres intervenant dans la précision de mesure est le facteur de qualité du ou des résonateurs.

ETAT DE LA TECHNIQUE

Les micro-capteurs à résonateur(s) vibrant(s) sont des microstructures à base de matériaux tels que le quartz et le silicium, qui comprennent un ou des résonateurs vibrants, typiquement une lame ou une poutre vibrante, enfermés dans une chambre à atmosphère contrôlée, typiquement sous vide.

Ces microstructures sont très appréciées car elles sont obtenues par des procédés de fabrication collectifs utilisant les étapes de fabrication habituelles des circuits intégrés électroniques, et permettent la réalisation de composants très petits et peu coûteux.

Le principe bien connu de la mesure est le suivant : on utilise un mode de résonance particulier du résonateur vibrant, contrôlé par un circuit d'excitation comportant une boucle de contrôle automatique de gain. Une grandeur physique externe appliquée au résonateur vibrant est ainsi convertie en une variation de la fréquence de résonance ou une variation de l'amplitude du mouvement vibratoire. Cette variation de fréquence de résonance ou d'amplitude permet une mesure de la contrainte appliquée.

Sur ce principe sont réalisés des micro-capteurs de pression, des micro-accéléromètres, ou encore des micro-gyromètres comme notamment décrit respectivement dans les demandes de brevet FR 0215599, FR 9202189 (ou EP 0557216) et FR 0507144.

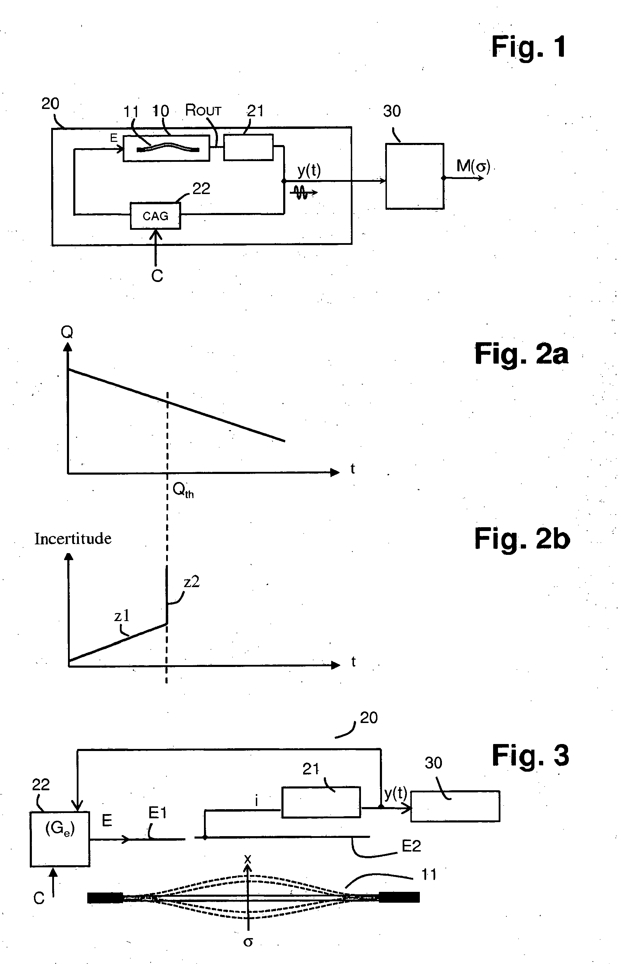

La figure 1 illustre très schématiquement les éléments fonctionnels d'un micro-capteur. Un résonateur 10 à élément(s) vibrant(s) 11 est inclus dans une boucle fermée 20 à contrôle automatique de gain. La boucle 20 comprend typiquement un circuit de détection de signal 21, et un circuit 22 de contrôle automatique de gain CAG. Le circuit de détection 21 comprend typiquement un amplificateur de signal et un filtre passe-bande, et est caractérisé par un gain $G_d$. Ce circuit de détection 21 détecte un signal électrique, représentatif de l'oscillation du résonateur, par exemple un courant, et fournit en sortie un signal électrique y(t) correspondant, après filtrage et amplification, représentatif du mouvement oscillant du résonateur.

Ce signal électrique y(t) et une consigne d'amplitude externe C sont appliqués en entrées du circuit 22 de contrôle automatique de gain, qui fournit en sortie un signal d'excitation électrique E correspondant, appliqué au résonateur. Le circuit 22 et la consigne C sont conçus pour faire osciller l'élément vibrant (ou les éléments vibrants) du résonateur avec une amplitude d'oscillation prédéterminée $A_0$.

En l'absence de toute contrainte, par exemple sous vide pour un capteur de pression, ou en cas d'accélération nulle pour un accéléromètre, l'élément vibrant oscille à une fréquence de résonance $f_o$ au repos. En cas de contrainte, la fréquence de résonance va varier. C'est cette différence de fréquence qui est la base de la mesure. La mesure est en pratique fournie par un dispositif de traitement de signal 30, généralement un système de traitement numérique qui échantillonne le signal y(t) et qui l'analyse par toutes techniques connues pour en déterminer la fréquence de résonance $f_a$, et fournir la mesure M correspondante de la contrainte physique recherchée (pression, fréquence, vitesse angulaire), à partir de la variation entre la fréquence $f_a$ mesurée, et la fréquence de résonance $f_0$ sans contrainte.

Pour les domaines d'application indiqués plus haut, les capteurs doivent être très performants en termes de sensibilité, précision et facteur d'échelle. La garantie de la précision de la mesure d'un micro-capteur est étroitement liée au maintien du vide dans le capteur. Ces capteurs sont aussi conçus pour que le facteur de qualité associé soit très élevé, de l'ordre de quelques dizaines de milliers ($10^4$) à plusieurs millions ($10^6$). Ces performances sont atteintes en utilisant les règles de l'art en matière de techniques de packaging sous vide poussé pour la fabrication de ces micro-capteurs.

En conditions opérationnelles, la structure des micro-capteurs peut se dégrader. Notamment une perte partielle de vide dans le capteur peut se produire, induisant une perte de précision sur la mesure, que l'utilisateur n'a aucun moyen de détecter. Ceci est un inconvénient majeur de ces micro-capteurs. Dans des domaines tel celui de l'avionique, il est en effet primordial de savoir à tout moment si la mesure fournie est fiable ou pas.

On doit ainsi être en mesure de pouvoir surveiller en cours de fonctionnement, les performances d'un micro-capteur.

Une grandeur qui fournit une information significative d'une dérive des performances du micro-capteur est le facteur de qualité. Comme illustré schématiquement sur les figures 2a et 2b, une baisse du facteur de qualité traduit une perte de précision sur la mesure, voire un décrochage de la boucle. Typiquement lorsque le facteur de qualité devient inférieur à un seuil déterminé $Q_{th}$, le capteur décroche.

Ainsi la surveillance du facteur de qualité pendant le fonctionnement du capteur est-elle une opération primordiale pour toutes les applications telles celles de l'avionique, où les mesures fournies par ces capteurs servent à des fonctions critiques de l'appareil dans lesquels ils sont embarqués.

La demande de brevet européen, publiée sous le No EP 1831663 enseigne une telle surveillance. Cette surveillance consiste à mesurer le gain du circuit de contrôle automatique de gain. Cette méthode est intéressante en ce qu'elle ne perturbe pas le fonctionnement du capteur, qui continue à délivrer sa mesure en sortie. Mais elle a comme inconvénient majeur de ne pas permettre de discriminer une dérive du facteur de qualité qui est un paramètre du résonateur, d'une dérive du gain de l'électronique du capteur. Or il est très important, notamment dans un objectif de diagnostic, de discriminer les défaillances dues à l'électronique du capteur de celles de la structure mécanique du capteur, c'est-à-dire du résonateur lui-même. On a vu en effet en relation avec les figures 2a et 2b que le facteur de qualité du résonateur impacte directement et fortement la sensibilité du capteur.

La publication scientifique de référence ISBN 978-2-35500-000-3, ayant pour titre "Architecture for integrated mems resonators quality factor measurement" présentée par Hervé Mathias et al, les 25-27 avril 2007 au symposium DTIP (pour Design, Test, Integration and Packaging), décrit une autre méthode, embarquable, qui permet la mesure pure du facteur de qualité d'un résonateur MEMS, en coupant l'excitation du résonateur, typiquement en ouvrant la boucle d'asservissement qui contrôle les oscillations du résonateur. Le résonateur passe d'un régime d'auto-oscillations entretenues, à un régime d'oscillations libres : l'amplitude des oscillations décroît, suivant une enveloppe exponentielle décroissante, dont la constante de temps est proportionnelle au facteur de qualité du résonateur. Comme détaillé au paragraphe 2 "*Measurement principle*", en supposant que l'on ouvre la boucle au moment où l'amplitude d'oscillation est maximale, égale à $V_0$, la valeur instantanée V(t) de l'amplitude des oscillations est une fonction de la durée t depuis l'ouverture de la boucle, de la valeur initiale $V_0$ de cette amplitude, de la fréquence de résonance $f_0$ au repos, et du facteur de surtension du résonateur. La mesure de la valeur instantanée V(t), à l'instant t, permet donc remonter à la valeur du facteur de qualité.

Selon la publication, une difficulté réside dans la précision de cette mesure. Pour obtenir une mesure précise, elle propose de mesurer le temps nécessaire pour passer de la valeur initiale $V_0$, à l'ouverture de la boucle, à une valeur fixée $V_0/k$. Selon cette publication le choix de k est déterminant sur la précision de la mesure du facteur de qualité. En outre, toujours selon cette publication, il est nécessaire que la méthode de mesure permette de mesurer des facteurs de qualité dont les valeurs s'étendent sur une large plage, correspondant aux différentes technologies et structure des résonateurs disponibles sur le marché. Elle enseigne ainsi qu'en prenant une valeur de k comprise entre 4 et 8, on peut mesurer le facteur de qualité pour une large gamme de résonateurs, avec une erreur de mesure sur le facteur de qualité limitée à quelques pourcents.

L'inconvénient de cette méthode c'est qu'en pratique, avec les valeurs de k prônées, correspondant à une atténuation du signal de sortie du résonateur supérieure à 6dB, la boucle d'asservissement du résonateur décroche : on perd la mesure du capteur. Ainsi, la méthode décrite ne peut être utilisée qu'en auto-test comme décrit dans la publication, c'est-à-dire au démarrage ou à la mise sous tension du micro-capteur, notamment dans des applications automobiles. Cette méthode ne peut pas être utilisée en mission, pendant le fonctionnement opérationnel du capteur.

Ainsi il n'existe pas de solutions connues qui permettent la surveillance en opérationnel de la dérive du facteur de qualité au moyen d'un dispositif intégré au micro-capteur, sans interrompre le fonctionnement du micro-capteur.

Le même problème peut se présenter pour des capteurs à résonateur qui fonctionnent sur le principe d'une mesure de l'amplitude des mouvements vibratoires plutôt que sur la mesure de la fréquence des oscillations. Et ce problème peut se poser aussi pour des micro-systèmes servant de base de temps (fournissant une oscillation à fréquence très stable) et non de capteur de mesure.

RESUME DE L'INVENTION

Pour résoudre ce problème, l'invention propose un dispositif intégré comportant

- un résonateur à élément(s) vibrant(s) placé dans un circuit oscillant contrôlé par une boucle d'asservissement, le circuit oscillant fournissant un signal d'oscillation à une fréquence constante ou à une fréquence variable représentant la mesure d'une grandeur physique, ce signal d'oscillation servant à élaborer un signal de sortie du dispositif intégré et le signal de sortie représentant une base de temps ou une mesure de grandeur physique, avec une précision nominale désirée,
- et un circuit de mesure du facteur de qualité du résonateur configuré pour effectuer une mesure du facteur de qualité pendant une phase de coupure de la boucle d'asservissement,

caractérisé en ce que le signal de sortie du dispositif intégré est fourni même pendant la phase de coupure, et en ce que le circuit de mesure du facteur de qualité comprend un circuit de séquencement configuré pour limiter à une valeur $T_d$ la durée de la phase de coupure, ladite valeur $T_d$ étant telle qu'à la fin de la phase de coupure, l'amplitude crête du signal d'oscillation est atténuée d'un facteur k inférieur à une valeur limite $k_0$ pour laquelle la base de temps ou la mesure de grandeur physique ne serait plus obtenue avec la précision désirée.

De préférence, la valeur $k_0$ est inférieure ou égale à 2.

Dans le cas où on cherche à faire une mesure de grandeur physique, l'invention concerne donc un dispositif intégré de mesure d'une grandeur physique comportant

- un micro-capteur comprenant un résonateur à élément(s) vibrant(s) recevant un signal d'excitation fourni à l'aide d'une boucle de contrôle automatique de gain en fonction d'une consigne d'amplitude et fournissant un signal de sortie défini par une amplitude crête ayant une valeur nominale $A_0$ fonction de ladite consigne et une fréquence de résonance, et
- un circuit de mesure d'un facteur de qualité du résonateur configuré pour effectuer une mesure du facteur de qualité pendant une phase de coupure du signal d'excitation provoquant une décroissance du signal,

caractérisé en ce que le circuit de mesure du facteur de qualité comprend un circuit de séquencement configuré pour contrôler une durée $T_d$ de la phase de coupure du signal d'excitation, ladite durée $T_d$ étant telle qu'à la fin de la phase de coupure, l'amplitude crête du signal de sortie est atténuée d'un facteur k avec $1<k\leq2$ par rapport à la valeur nominale $A_0$, et mesurer le facteur de qualité pendant ladite phase de coupure.

L'invention concerne aussi un procédé de mesure du facteur de qualité d'un résonateur vibrant dans un micro-système comprenant un résonateur à élément(s) vibrant(s) placé dans un circuit oscillant contrôlé par une boucle d'asservissement, le circuit oscillant fournissant un signal d'oscillation à une fréquence constante ou à une fréquence variable représentant la mesure d'une grandeur physique, ce signal d'oscillation servant à élaborer un signal de sortie du dispositif intégré et le signal de sortie représentant une base de temps ou une mesure de grandeur de physique, avec une précision nominale désirée. Le procédé est caractérisé en ce qu'on effectue une mesure du facteur de qualité pendant une phase de coupure de la boucle d'asservissement, tout en fournissant le signal de sortie du dispositif intégré, et en ce qu'on limite à une valeur $T_d$ la durée de la phase de coupure de la boucle d'asservissement, ladite valeur $T_d$ étant telle qu'à la fin de la phase de coupure, l'amplitude crête du signal d'oscillation est atténuée d'un facteur k inférieur à une valeur limite $k_0$ pour laquelle la base de temps ou la mesure de grandeur physique ne serait plus obtenue avec la précision désirée.

D'autres caractéristiques et avantages de l'invention sont détaillés dans la description détaillée suivante et l'invention est illustrée sur les dessins dans lesquels :

- la figure 1 déjà décrite est un schéma simplifié d'un micro-capteur de mesure à résonateur(s) à éléments(s) vibrant(s), avec contrôle d'excitation par boucle de contrôle automatique de gain;
- les figures 2a et 2b illustrent la relation qui lie facteur de qualité et précision de mesure d'un micro-capteur à résonateur à élément(s) vibrant(s);
- la figure 3 illustre schématiquement les éléments d'un résonateur de type capacitif contrôlé par une boucle de contrôle automatique de gain conforme à l'état de l'art;
- la figure 4a est une courbe en fonction du temps montrant l'atténuation d'amplitude du signal de sortie du résonateur, par coupure du signal d'excitation de la boucle de contrôle automatique de gain, et l'enveloppe de ce signal;
- la figure 4b est une vue agrandie d'une portion de la courbe représentée à la figure 4a;
- la figure 5 illustre l'évolution de l'enveloppe du signal de sortie dans les deux phases successives de coupure et rétablissement du signal d'excitation, selon un mode de mise en oeuvre préféré de l'invention;
- la figure 6 représente un synoptique de calcul du carré de l'enveloppe du signal de sortie, faisant usage de la transformée de Hilbert permettant une mesure directe du facteur de qualité ; et
- la figure 7 est un schéma-bloc d'un dispositif de mesure intégré dans un exemple de mise en oeuvre de l'invention correspondant.

## DESCRIPTION DETAILLEE

Prenons en exemple un micro-capteur à élément vibrant du type poutre ou membrane, formant résonateur capacitif à fréquence variable en fonction d'une contrainte appliquée suivant la direction axiale de l'élément vibrant, telle qu'une pression ou une accélération, et contrôlé par une boucle d'asservissement à contrôle automatique de gain, comme par exemple décrit dans les demandes de brevet européennes Nos EP 0557216 et EP 1995575.

Le schéma bloc simplifié de la figure 3 illustre les éléments principaux de ce micro-capteur. Le résonateur capacitif est formé par un élément vibrant 11, de type poutre ou membrane, une électrode de détection E2 qui recouvre une grande partie de la longueur de l'élément vibrant, et une électrode d'excitation E1, couvrant le reste de la longueur de l'élément vibrant, et qui reçoit un signal d'excitation E.

L'élément vibrant 11 et l'électrode de détection E2 forment un résonateur à capacité variable : la valeur de capacité varie à la faveur de l'oscillation de l'élément vibrant qui se rapproche ou s'éloigne de l'électrode de détection E2. Cette oscillation est obtenue sous l'effet du signal d'excitation E appliqué sur l'électrode d'excitation E1. Si on polarise E2 sous une tension continue, un courant représentatif de la variation de capacité y apparaît. Ce courant i est détecté sur l'électrode de détection par l'amplificateur de charge du circuit de détection, qui fournit en sortie une tension correspondante : c'est le signal de sortie y(t) du capteur, qui est utilisé par le circuit de mesure 30 pour retrouver la contrainte appliquée au capteur, et qui est appliqué comme entrée dans la boucle de contrôle automatique de gain 20, permettant de générer le signal d'excitation.

Le signal d'excitation E est typiquement la superposition d'une tension continue et d'une tension alternative. Elle est délivrée par la boucle de contrôle automatique de gain. Dans l'exemple, un circuit de détection et amplification 21 détecte le courant i sur l'électrode de détection, et fournit en sortie une tension continue proportionnelle à l'amplitude du courant détecté. Un circuit 22 de contrôle automatique de gain CAG délivre le signal d'excitation E, typiquement une tension, en fonction de l'amplitude de la tension en sortie du circuit de détection et de la consigne d'amplitude, qui est un paramètre externe prédéterminé, fonction des caractéristiques et performances du capteur.

Le gain total de la boucle d'asservissement 20 est égal à $G_e.G_d$, où $G_d$ est le gain du circuit de détection et $G_e$ le gain du circuit d'excitation. Si $G_d$ a une valeur connue, fonction des éléments constitutifs (amplificateur de charge) de l'électronique du circuit de détection 21, la valeur du gain Ge est calculée par le circuit de contrôle automatique de gain 22 en fonction de la tension de sortie du résonateur et de la consigne d'amplitude C de la boucle.

En l'absence de contrainte, c'est-à-dire dans une atmosphère dans laquelle la pression correspond à la pression interne de la chambre sous vide ou atmosphère réduite dans laquelle est placé le résonateur, et en régime établi, lorsque la boucle d'asservissement a amené l'amplitude d'oscillation du résonateur à son niveau nominal $A_0$, l'élément vibrant oscille selon une direction axiale, à une fréquence de résonance propre $f_0$ du résonateur. Dans ces conditions, on a : $G_e.G_d=\omega_0/Q$, où Q est le facteur de qualité du résonateur.

Sous l'effet d'une contrainte axiale externe $\sigma$ s'appliquant suivant l'axe x comme illustré, la boucle d'asservissement du capteur ayant pour fonction de maintenir l'amplitude crête d'oscillation à une valeur nominale $A_0$, la fréquence de résonance va varier. Cette variation de fréquence est une image de la contrainte appliquée. La nouvelle fréquence d'oscillation, $f_a$.est reliée à la grandeur $\sigma$ comme suit :

$$f_a = f_0 \sqrt{1+\frac{\sigma}{\sigma_\varsigma}} \qquad\qquad (EQ.1)$$

où $\sigma_c$ représente une contrainte critique de flambage, paramètre physique connu du résonateur.

A partir de la mesure de la fréquence de résonance, on peut ainsi remonter à une mesure de la contrainte $\sigma$, $f_0$, et $\sigma_c$ étant connus.

Dans l'exemple d'un capteur de pression, $\sigma$ est l'image de la pression extérieure s'exerçant suivant l'axe x de mesure. Pour un capteur d'accélération, $\sigma$ serait l'image de l'accélération extérieure s'exerçant suivant l'axe x de mesure.

Pour effectuer cette mesure de la fréquence de résonance du résonateur, la nature non linéaire de la relation EQ.1 pose un problème fondamental. En effet, la contrainte $\sigma$ dans la relation EQ.1 contient non seulement la contrainte utile appliquée au capteur, mais également des termes de vibrations pouvant atteindre des valeurs très élevées. Ces termes de vibrations entraînent une erreur au niveau de la contrainte estimée (à la fois un biais et une erreur de facteur d'échelle). Le niveau des vibrations étant aléatoire, ces erreurs ne peuvent être compensées. En pratique, le circuit de traitement de signal 30 doit mettre en oeuvre des algorithmes permettant de fournir en sortie la valeur de la contrainte utile, correspondant à la fréquence de résonance du résonateur. La demande EP 1995575 A propose par exemple un tel circuit, comprenant un système d'analyse de la fréquence qui effectue une démodulation large bande du signal de sortie du résonateur, en sorte que la contrainte estimée contient la contrainte utile et les termes de vibration, et ceux-ci sont ensuite éliminés par filtrage.

Cette demande fait application de la représentation du mouvement oscillant de l'élément vibrant du résonateur par un oscillateur équivalent monodimensionnel, suivant la direction de l'axe sensible, x, du capteur. En l'absence de contrainte extérieure, la position A de l'oscillateur sur cet axe x, représentatif de l'amplitude de l'oscillation à un instant t, vérifie l'équation différentielle suivante :

$$\frac{d^2A}{dt^2}+\frac{\omega_0}{Q}\frac{dA}{dt}+\omega_0^2(1+\frac{\sigma}{\sigma_c})A+\beta_i A^3 = e(t) \qquad\qquad (EQ.2)$$

où $\omega_0$ (=$2\pi f_0$) est la pulsation de résonance propre du capteur, et Q, le facteur de qualité du résonateur. Le terme $\beta_f A^3$ est un terme de non linéarité du $3^{\text{ième}}$ ordre, traduisant la variation de la fréquence propre du résonateur avec l'amplitude de vibration.

Ces rappels étant faits sur le fonctionnement et la mesure dans ces capteurs à éléments vibrants, considérons maintenant un tel résonateur mis en régime d'oscillation stabilisé.

Supposons maintenant que l'on coupe le signal d'excitation E: l'oscillateur passe en régime d'oscillations libres et l'amplitude des oscillations décroit.

Dans cette phase de décroissance, la position A de l'oscillateur suivant l'axe x suit une loi exponentielle. Le signal de sortie y(t) en sortie du circuit de détection 20 s'écrit :

$$y(t) = A_0 e^{-\xi \omega_0 t} \sin\left(\omega_0 \sqrt{1-\xi^2}\, t + \varphi\right) \qquad \text{(EQ.3)}$$

où $\xi$, représente l'amortissement fluide, tel que $\xi \triangleq \dfrac{1}{2Q}$.

L'oscillation en phase de décroissance n'est plus exactement à la pulsation $\omega_0$ mais est réduite d'un facteur $(1-\xi^2)^{1/2}$. Pour les micro-capteurs à éléments vibrants objets de l'invention, le facteur de qualité Q est élevé, au moins de l'ordre de $10^4$ ou plus ($10^5$, $10^6$...), en sorte que ce terme d'amortissement est en réalité très petit, négligeable.

Mais plus intéressant, dans cette phase de décroissance, le signal décroît selon une enveloppe exponentielle décroissante $e^{-t/\tau}$, dont la constante de temps $\tau$ est proportionnelle à Q. On a en effet l'égalité suivante

$$\tau = \frac{1}{\xi.\omega_0} = \frac{2.Q}{\omega_0} \quad , \ \text{soit} \ \ Q = \frac{\tau.\omega_0}{2} \qquad \text{(EQ.4)}$$

Ainsi, si on peut mesurer cette constante de temps avec précision en régime d'oscillations libres (boucle d'asservissement ouverte), on obtient une mesure précise du facteur de qualité Q du résonateur. Il s'agit bien du facteur de qualité du résonateur lui-même, car dans cette mesure, la boucle d'asservissement étant ouverte, l'électronique du capteur n'intervient pas du tout, et c'est bien ce qui est cherché dans l'invention.

L'invention fait application de cette propriété connue, mais d'une manière qui ne provoque pas le décrochage de la boucle d'asservissement, contrairement aux enseignements de l'état de l'art.

Dans l'invention, la mesure fournie par le capteur reste fiable et disponible pendant que l'on effectue la mesure du facteur de qualité. On peut ainsi assurer une surveillance en temps réel du facteur de qualité sans perturber le fonctionnement opérationnel du capteur en sorte que l'on dispose en temps réel à la fois de la mesure du capteur et d'une mesure qui renseigne sur la fiabilité de cette mesure.

Selon l'invention, la mesure du facteur de qualité est réalisée en coupant le signal d'excitation, l'oscillateur passant ainsi en régime d'oscillations libres. Cette coupure est maintenue pendant une durée déterminée $T_d$, telle que l'amplitude crête A du signal de sortie du résonateur soit atténuée d'un facteur k inférieur à une valeur limite $k_0$. La valeur $k_0$ est choisie telle que la mesure de la grandeur physique par le capteur continue de pouvoir être obtenue avec la précision nominale qu'on souhaite. De préférence, la valeur $k_0$ est inférieure ou égale à 2, c'est-à-dire que $1 < k \leq 2$. Le signal d'excitation est alors à nouveau appliqué.

Dans ces conditions de coupure du signal d'excitation, pendant une durée délimitée $T_d$ telle que l'amplitude crête du signal soit atténuée d'un facteur au plus égal à 2, le rapport signal sur bruit est peu dégradé : la coupure du signal d'excitation ne provoque pas de décrochage de la boucle d'asservissement : la mesure fournie par le capteur reste suffisamment précise pendant la phase d'ouverture de la boucle. Idéalement k est compris entre 1,4 et 1,5, c'est-à-dire que la durée de l'ouverture de la boucle correspond à une atténuation de l'amplitude crête du signal de sortie de l'ordre de 30% : la dégradation correspondante du rapport signal sur bruit du signal de sortie du capteur sera de l'ordre de 3dB, en sorte que le capteur ne va pas décrocher et continue donc à fournir une mesure qui reste assez précise. Par ailleurs, la durée $T_d$ de la phase de coupure du signal d'excitation est suffisante à permettre la mesure précise du facteur de qualité.

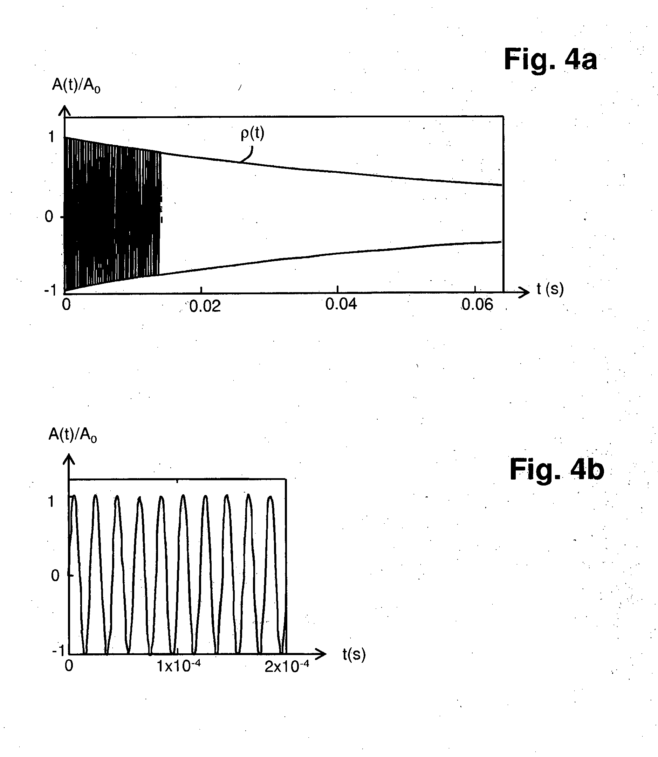

La figure 4a montre un tracé correspondant du signal y(t) correspondant et donné par l'équation EQ.3. Plus précisément, la figure donne le tracé de l'enveloppe $\rho$, c'est-à-dire de l'amplitude crête instantanée A du signal de sortie y(t), pour une amplitude crête nominale $A_0$ normalisée à 1, une fréquence de résonance $f_0$ égale à 50 kHz, et un déphasage $\varphi$ égal à 0 radian, et un facteur de surtension Q égal à 10000. La figure 4b est un zoom du début de cette courbe de décroissance. Dans cet exemple, la constante de temps $\tau = \dfrac{2.Q}{\omega_0}$ est égale = 0,064 seconde.

On peut accéder facilement à une mesure du facteur de qualité Q à partir du signal y(t) ou de son enveloppe p(t).

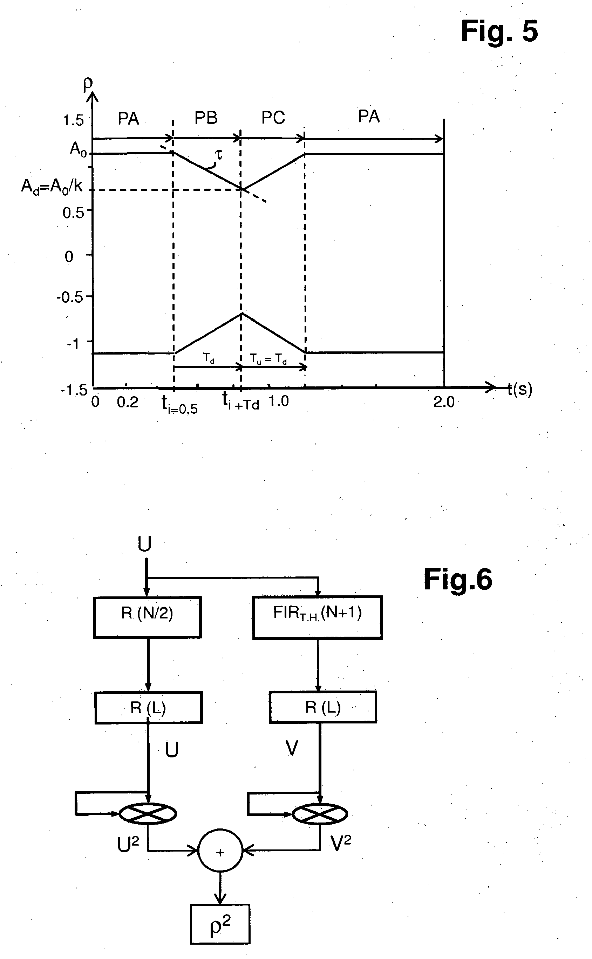

Avant de détailler le traitement de signal mis en oeuvre pour déterminer la valeur du facteur de qualité pendant la phase de décroissance, revenons au séquencement des étapes de décroissance et remontée de l'amplitude du signal de sortie y(t), selon l'invention, en référence à la figure 5.

Une séquence de mesure du facteur de qualité selon l'invention, est obtenue en forçant le résonateur à passer d'un régime d'oscillation stabilisé PA, contrôlé par la boucle de contrôle automatique de gain et en référence à une consigne d'amplitude C, à un régime d'oscillations libres PB , par coupure du signal d'excitation E, provoquant une atténuation partielle, d'un facteur k prédéterminé, avec $1 < k \leq 2$, de l'amplitude du signal de sortie y(t).

La durée $T_d$ de cette phase PB est ainsi fonction de la pente de décroissance de l'amplitude du signal de sortie, et du facteur d'atténuation k choisi sur l'intervalle des réels ]1-2].

A la fin de la phase de coupure, soit à $t_i + T_d$, si $t_i$ est l'instant marquant le début de la phase PB, correspondant à la coupure du signal d'excitation, l'amplitude crête du signal est égale à $A_0/k$. Cette phase est suivie de la ré-application du signal d'excitation E de manière à revenir au régime d'oscillation stabilisé PA. On a ainsi une phase transitoire PC de durée $T_u$, entre la fin de la phase PB, à l'instant $t_i + T_d$, et le retour au régime stabilisé, à partir de l'instant $t_i + T_d + T_u$. Cette durée $T_u$ de la phase transitoire est le temps nécessaire pour que l'amplitude crête du signal de sortie du résonateur retrouve sa valeur nominale $A_0$.

Le tracé de la figure 5 représente la tension aux bornes d'un convertisseur analogique numérique pour une amplitude crête normalisée à 1. Il met ainsi en évidence la décroissance de cette amplitude crête, dans la phase PB de coupure commandée à un instant $t_i = 0,5$ seconde, puis la remontée de cette amplitude à partir de l'instant $t_i + T_d$, pendant la phase PC de remontée, correspondant à une séquence de mesure selon un mode de mise en oeuvre de l'invention.

L'exemple illustré correspond au signal de sortie d'un accéléromètre à MEMS (micro-accéléromètre) ayant les caractéristiques de base suivantes : $f_0 = 47$ kHz, $Q = 10^5$ et un rapport signal à bruit électronique de 85dB/Hz. Dans l'exemple de la séquence de mesure illustrée, le facteur k est égal 1,66, correspondant à un seuil $A_d$ fixé à 60% de la valeur initiale $A_0$.

La durée $T_d$ de décroissance est donnée par la formule suivante :

$$T_{d=} -\frac{2Q}{\omega_0} \ln(A_d) \qquad\qquad EQ.5$$

L'application numérique donne $T_d = 0,37$ seconde.

De préférence et comme représenté, dans la phase PC de remontée de l'amplitude crête du signal, pour retrouver les conditions du régime stabilisé PA, on applique un gain d'excitation supérieur au gain d'excitation en régime stabilisé, en sorte que la croissance de l'amplitude crête jusqu'à retrouver la valeur nominale $A_0$ du régime stabilisé, soit plus rapide, et de préférence égale à la durée de coupure..

Comme illustré, on obtient $T_u$ égal au temps de descente $T_d$, en appliquant un gain $G_{e1}$ du circuit d'excitation égal au double de sa valeur nominale $G_{e0}$ vérifiant $G_{e0}.Gd = \omega_0/Q$. On impose ainsi de préférence pendant la phase PC de remontée, un gain d'excitation $G_{e1}$ tel que $G_{e1}.Gd = 2\omega_0/Q$.

Avantageusement, la répétition des étapes de mesure PB et de remontée du signal PC, permet de suivre l'évolution au cours du temps du facteur de qualité, sans perturber le fonctionnement du capteur qui continue pendant ce temps à délivrer une mesure de la contrainte externe $\sigma$ avec la précision nominale désirée.

En pratique, la phase de coupure PB sera avantageusement réalisée par le forçage à zéro de la consigne d'amplitude C du circuit de contrôle automatique de gain, ce qui équivaut à forcer à zéro le gain $G_e$ du circuit 22 de la boucle de CAG. La consigne d'amplitude C étant un paramètre externe typiquement appliqué dans une phase d'initialisation du capteur, on prévoira alors que cette consigne puisse être modifiée en cours de fonctionnement du capteur, en fonction du séquencement voulu, c'est-à-dire être mise à zéro (0), de manière à déclencher la première phase PB de la séquence de mesure du facteur de qualité, puis reprendre une valeur nominale $C_0$, de régime stabilisé PA , ou de préférence une valeur transitoire ($C_1$) supérieure à la valeur nominale $C_0$ (figure 4a), pour obtenir un gain d'excitation $G_{e1}$ de la phase de remontée PC, permettant de retrouver rapidement le régime stabilisé. De préférence la valeur $C_1$ est choisie pour compenser exactement l'amortissement de la phase de coupure PB. L'ordonnanceur peut appliquer la valeur nominale de consigne $C_0$, dès que le signal de sortie retrouve son amplitude crête initiale $A_0$ : le résonateur se trouve à nouveau dans la phase PA de régime stabilisé d'oscillations forcées. On note que la valeur $T_u$ n'intervient pas sur la mesure de Q. On cherche simplement à l'optimiser pour retrouver le plus rapidement possible le régime stabilisé PA.

Le contrôle de la durée $T_d$ peut être réalisé par exemple par comparaison du niveau relatif de l'enveloppe p(t) du signal de sortie y(t), au seuil $A_d$. On obtient alors directement Q en faisant application des égalités vues précédemment, avec une précision de mesure qui peut facilement être inférieure à 1 %.

On peut aussi pré-calculer la valeur $T_d$ correspondant au seuil $A_d$ prédéterminé, à partir d'un modèle thermique du facteur de qualité. Cela nécessite un capteur externe de température, qui fournit une mesure de la température, et on détermine la valeur Q correspondante à partir du modèle thermique. La valeur $T_d$ est alors donnée la formule EQ.7. On prévoit alors des moyens de décomptage de cette durée $T_d$, pour déterminer la fin de la phase de coupure. Le signal d'excitation est à nouveau appliqué

Dans le cas où on fait l'hypothèse que l'amplitude décroît linéairement durant la phase de coupure, on peut alors, si on reprend la figure 5, considérer qu'on peut faire une mesure directe de Q en mesurant la pente de décroissance sur la durée de coupure $T_d$, en utilisant les deux formules suivantes:

$$\tau = 2Q/\omega 0 \hspace{4cm} EQ.6$$

et

$$\tau = (A_0 \dot{T}_d) / (A_0 - A_d)). \hspace{3cm} EQ.7.$$

Notamment, si on dispose d'un détecteur de l'enveloppe p(t) du signal de sortie du résonateur, on sait déterminer les amplitudes $A_0$ et $A_d$ correspondant à l'amplitude crête au début, et à la fin de la phase de coupure selon l'invention. La détection du passage sous le seuil $A_d$ donne la valeur de $T_d$, ou bien $T_d$ est pré-calculé

Cependant, en pratique, on utilise de préférence des techniques de traitement de signal adaptées aux environnements bruités et permettant de s'affranchir des erreurs de biais et d'échelle, pour mesurer le facteur de qualité suivant le principe de l'invention.

Avantageusement, on utilise une méthode faisant usage des enseignements de la demande de brevet européen publiée sous le numéro EP 1995575 et qui utilise un dispositif de calcul des fréquences qui permet de mesurer correctement la fréquence d'oscillation de l'élément vibrant en environnement perturbé. On pourra se reporter utilement au texte de cette demande pour tous les détails concernant ce dispositif de calcul. En résumé, ce système d'analyse de fréquence est basé sur l'utilisation de la transformée de Hilbert d'une fonction U représentative de la position A du résonateur.

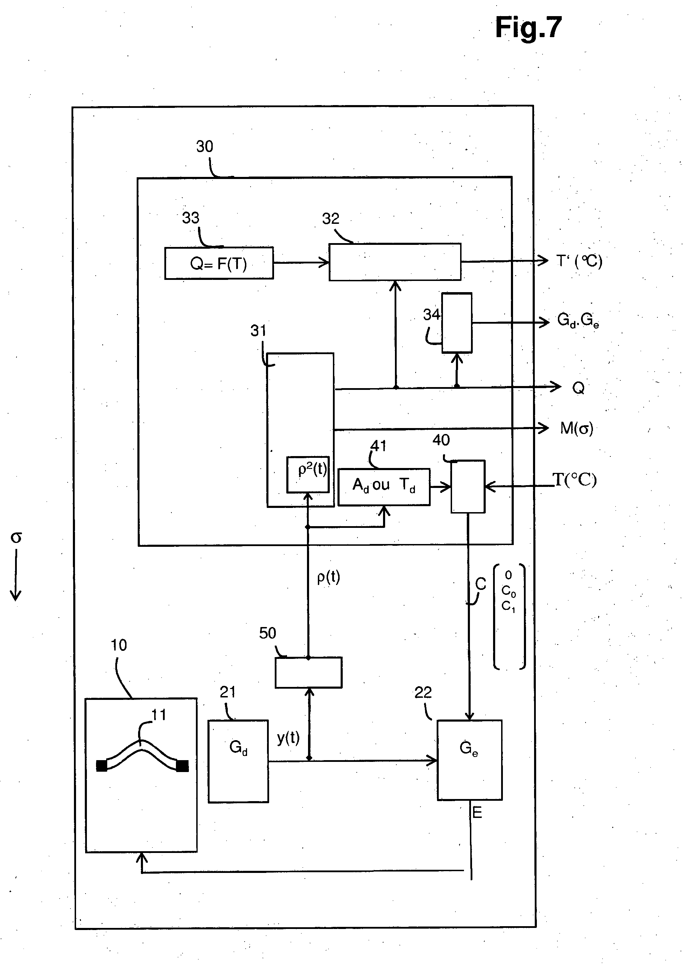

La fonction U correspond à l'enveloppe p(t) du signal y(t) en sortie du résonateur, appliqué en entrée d'un convertisseur analogique numérique, et représente la position instantanée du résonateur suivant l'axe x (Figure 3). Le circuit de traitement numérique du signal comprend alors un détecteur d'enveloppe 50 (Figure 7), et des moyens 60 permettant de réaliser la transformée de Hilbert de la fonction U, notée V, et une fonction égale à $U^2 + V^2$ qui est mathématiquement égale au carré de l'enveloppe, noté $\rho^2$.

Les moyens de calcul 60 sont illustrés sur la figure 6 qui reprend de la figure 2 du brevet EP1995575, les éléments de calcul qui sont utiles à la mesure du facteur de qualité, qui est ce qui nous intéresse ici. Cette réalisation pratique ne pose pas de problèmes particuliers de mise en oeuvre. Les différents éléments électroniques qui sont chacun représentés par un rectangle sur cette figure, sont les suivants :

- un filtre à réponse impulsionnelle finie notée $FIR_{TH}$ à N+1 points, dont la bande spectrale inclut les raies d'amplitude significative du signal U, calculant ainsi la transformé de Hilbert du signal U ;
- des lignes à retard notées R(N/2), permettant de synchroniser les signaux U et V, en retardant le signal U de N/2 points;
- deux multiplicateurs permettant de calculer le carré du signal U et du signal V,
- un sommateur calculant la fonction $U^2 + V^2$.

Dans l'exemple, d'autres lignes à retard notées R(L) de L points sont prévues pour retarder les signaux U et V, pour qu'ils soient synchrones d'autres signaux utilisés dans la demande EP (et non illustrés ici). Ces lignes à retard sont indiquées en pointillées. Ils ne sont pas nécessaires pour calculer la fonction $U^2 + V^2$.

On dispose ainsi aisément du carré de l'enveloppe $\rho^2$. Or l'expression théorique du carré de l'enveloppe, $\rho^2$, durant la phase de décroissance est $\rho^2$ avec K une constante.

On peut ainsi estimer Q par régression linéaire sur $\ln(\rho^2)$ durant la phase de décroissance.

Dans cet exemple, comme on dispose de l'enveloppe du signal de sortie de résonateur, la fin de la phase de coupure sera détectée par comparaison du niveau relatif de l'enveloppe, au seuil $A_d$.

On peut encore utiliser une autre méthode de mesure qui reste satisfaisante en termes de précision, en particulier si on ne dispose pas d'un détecteur d'enveloppe. Dans cette méthode, la durée $T_d$ de la phase de coupure sera préalablement calculée d'après le modèle thermique du facteur de qualité pour le capteur considéré, et décomptée pour déterminer la fin de cette phase de coupure, comme indiqué précédemment.

On peut alors estimer Q à partir du signal U, en estimant l'amplitude crête $A(t_0)$ au début et l'amplitude crête $A(t_0 + T_d)$ à la fin de la phase de décroissance, par détection de pics du signal y(t). On obtient l'estimée du facteur Q par la formule générale :

$$\hat{Q} = \frac{\omega_0 T_d}{2\ln\left(\dfrac{\hat{A}(t_0)}{\hat{A}(t_0 + T_d)}\right)} \qquad\qquad \text{EQ.8}$$

(qui est la formule générale de la formule EQ.7 dans laquelle on a $A_0$ normalisée à 1) ; le chapeau sur les lettres Q et A indique qu'il s'agit d'estimations de Q et A.

La précision sur la mesure de Q reste satisfaisante. En effet, la mesure de l'amplitude crête ou de l'enveloppe est perturbée par le bruit du capteur, qui provient essentiellement de l'amplificateur de charge (circuit 21). On peut modéliser ce bruit comme un bruit blanc en tension dans la bande du résonateur.

En effectuant un développement limité au $1^{er}$ ordre de l'équation EQ.8 ci-dessus, on voit que l'erreur de précision relative sur la mesure de Q est Gaussienne. Son écart type est égal à l'inverse du rapport signal à bruit (rapport entre la puissance crête et le bruit auquel on retranche 3dB de calcul différentiel). Avec un seuil $A_d$ =0.6, la précision à 1 sigma avec cette méthode basique est de quelques pourcents pour un capteur typique. Une telle précision est suffisante pour permettre la prévention des pannes.

En effectuant une régression linéaire, on améliore cette précision d'un facteur supérieur à 10, car on observe plusieurs milliers de pics de signal affectés d'un bruit indépendant.

Ainsi, l'invention qui vient d'être décrite permet de suivre avec précision l'évolution du facteur de qualité pendant le fonctionnement opérationnel du capteur. Dans le cas de microcapteurs comprenant plusieurs résonateurs vibrants, notamment les microaccéléromètres à mesure différentielle, on mesurera le facteur de qualité de chacun des résonateurs selon le principe de l'invention.

La mesure répétée du facteur de qualité selon l'invention, et plus spécialement l'introduction répétée de la séquence comprenant une phase de décroissance suivie d'une phase de remontée, ne dégrade pas significativement les performances du capteur.

Notamment, s'agissant des effets des mesures du facteur de qualité sur le bruit de mesure, la dégradation temporaire du rapport signal à bruit est de 3dB pour un seuil $A_d$=0.7. L'effet sur les performances moyennes va dépendre de la périodicité de ces mesures. Dans une application de prévention des pannes, on peut vraisemblablement espacer les mesures du facteur de qualité de plusieurs minutes, ce qui rend cet effet statistiquement négligeable.

S'agissant de l'erreur sur le facteur d'échelle, un calcul théorique montre que la présence d'un terme d'amortissement non-nul dans l'équation 1 génère une erreur de facteur d'échelle de $\dfrac{1}{2h\,Q^2}$ durant la phase de croissance et de décroissance, où h est le facteur d'échelle. Ce terme est négligeable pour les capteurs de pression comme pour les accéléromètres, compte-tenu de l'ordre de grandeur de Q ($10^4$ et plus). Il est par exemple inférieur à 0.1 $\mu$g/g pour les accéléromètres.

S'agissant de l'effet de la non-linéarité cubique de raideur du résonateur, on rappelle qu'un résonateur possède une non-linéarité cubique (d'origine mécanique ou électrostatique) de raideur, qui se traduit par un terme supplémentaire $\dfrac{h_{nl}}{m_r} A^3$ dans l'équation 1 avec $h_{nl}$, l'erreur de non-linéarité cubique, en N/m/m$^2$ et $m_r$ la masse du résonateur en kg.

Cette non-linéarité se traduit sur la mesure $\sigma$ par un biais égal à $\dfrac{3}{8h\omega_0^2} \dfrac{h_{nl}}{m_r} \rho^2$ avec p l'enveloppe du signal y(t). La valeur de ce biais pour l'amplitude nominale d'oscillation - qui est d'environ 1 mg pour un microaccéléromètre et d'environ $9.10^{-3}$ hPa pour un microcapteur de pression - est supprimée par la calibration du capteur. La mesure de la surtension, en faisant fluctuer l'enveloppe, va créer une erreur dont la valeur maximale est atteinte à $t_0 + T_d$ et vaut alors

$$\frac{3}{8h\omega_0^2}\frac{h_{nl}}{m_r}\left(1-A_d^2\right)\rho^2$$ sur chacune des voies. Dans un accéléromètre qui utilise deux résonateurs montés en différentiel, cette erreur in-run sera supprimée à quelques µg près par la combinaison différentielle. Le biais in-run est obtenu en intégrant l'erreur sur le temps. Si la durée relative des phases de mesure du facteur de qualité selon l'invention est de 1%, le biais sur une voie sera ramené à moins de 10µg pour l'accéléromètre avant même la combinaison différentielle qui va totalement l'annuler. Pour un capteur de pression ayant une résolution de 0.03 hPa. on peut montrer par calcul que l'erreur maximale sur le mesurande fournit par le capteur à $t_0 + T_d$ est typiquement de l'ordre de quelques millièmes d'hPa avant intégration dans le temps, ce qui est négligeable devant la résolution du capteur.

Si on désire cependant corriger cette source d'erreur, il est possible de la corriger totalement par traitement, en rajoutant un terme correctif $a\rho^2$ à la mesure de σ avec un coefficient $a$ déterminé par calibration. On peut aussi annuler le biais sans modifier le traitement capteur, soit en calibrant le capteur sur une durée égale à la période de rafraîchissement de la mesure de la surtension, soit en augmentant très légèrement l'amplitude nominale en fonctionnement opérationnel pour garder la valeur moyenne de $\rho^2$ constante par rapport à celle durant la calibration.

En conclusion, la mesure en fonctionnement du facteur de qualité Q par la méthode de l'invention peut être effectuée sans dégrader la performance du capteur.

Cette mesure permet de déterminer l'évolution d'autres paramètres caractéristiques du capteur.

Notamment, dès que l'on retrouve la phase PA de régime stabilisé suivant une séquence de mesure du facteur de qualité Q, le gain de la boucle d'asservissement vérifiant l'équation $G_e.Gd=\omega 0/Q$, et obtient une mesure du gain de la boucle pour la consigne d'amplitude nominale ($C_0$). De même que l'on peut suivre l'évolution du facteur de qualité en cours de fonctionnement du capteur, on peut donc suivre aussi le gain de la boucle.

Par ailleurs, le facteur de qualité dépend de la température du résonateur, et on dispose pour un capteur donné, d'un modèle thermique correspondant mesuré en usine.

Ainsi, la valeur mesurée de Q, permet, par comparaison au modèle thermique reliant la valeur de Q, à une température, de fournir une information de température du résonateur, qui peut être éventuellement comparée à la température fournie par une sonde de température.

Ces différentes mesures renseignent sur l'état ou les conditions d'utilisation du capteur.

La figure 7 illustre une mise en oeuvre de l'invention au moyen d'un séquenceur 40, qui déclenche les séquences de mesure du facteur de qualité en fournissant les valeurs correspondantes de la consigne d'amplitude de la boucle de contrôle automatique de gain 0, pour commander la coupure du signal d'excitation ; $C_0$ ou $C_1$, selon que l'on rétablit les valeurs initiales de consigne d'amplitude, ou que l'on cherche à retrouver le régime stabilisé plus rapidement .

Plus particulièrement l'application des consignes $C_0$ ou $C_1$, après la phase de coupure est activée par le circuit 41 de détection de la fin de la phase de coupure.

Dans cet exemple de mise en oeuvre, une mesure de température T du capteur est fournie par un capteur externe, permettant de calculer la valeur de la durée $T_d$ de coupure, comme expliqué précédemment en déterminant une valeur Q correspondante à partir d'un modèle thermique 33 du facteur de qualité, obtenue en usine, et mémorisé dans le circuit 30, pour calculer la formule donnée par EQ.5. La valeur $T_d$ ainsi calculée peut alors être utilisée pour la détection par un circuit 41, de la fin de la phase de coupure du signal d'excitation.

La détection de la fin de la phase de coupure par le circuit 41 peut encore utiliser une comparaison du niveau de l'enveloppe p(t) au seuil prédéterminé $A_d$.

Le modèle thermique 33 du facteur de qualité Q, peut encore être utilisé pour fournir une valeur de température T' en sortie, correspondant à la valeur mesurée pendant une phase de coupure selon l'invention, du facteur de qualité.

Enfin, une mesure du gain de la boucle d'asservissement $G_dG_e$ est également calculée par un circuit 34, à partir de la valeur de Q mesurée pendant une phase de coupure selon l'invention, à partir de la formule $G_{e0}.Gd=\omega 0/Q$.

Ces mesures supplémentaires T' et $G_eG_d$ en fonction de la valeur de Q mesurée selon l'invention, peuvent être ensuite utilisées dans un système d'analyse général de l'évolution dans le temps des paramètres caractéristiques du capteur.

Enfin, la mesure du facteur de qualité Q pendant la phase de coupure est réalisé par un circuit de traitement de signal 31 adapté à la technique d'analyse du signal de sortie du résonateur retenue.

Par exemple, et comme illustré, un circuit de détection d'enveloppe p(t) est prévu, et le circuit 31 comprend les éléments de calcul de la figure, pour calculer le carré de l'enveloppe, (t), puis calculer la valeur de Q par régression linéaire de $\ln(\rho^2)$ sur la durée $T_d$ de la phase de coupure.

D'autres techniques peuvent être utilisées, et notamment les techniques directes de mesure de la pente de décroissance, ou par estimées, comme précédemment décrit.

L'invention s'applique à tous les microcapteurs comprenant un résonateur ou plusieurs résonateurs à élément(s) vibrant(s), et à des microcapteurs de structures mécaniques diverses.

Elle s'applique notamment aux microcapteurs qui comprennent au moins deux résonateurs permettant d'appliquer des techniques de mesure différentielles, permettant de compenser certaines erreurs de l'électronique : L'invention s'applique à la mesure du facteur de qualité de chacun de ces résonateurs.

**Revendications**

1. Dispositif intégré comportant

   - un résonateur (10) à élément(s) vibrant(s) (11) placé dans un circuit oscillant contrôlé par une boucle d'asservissement, le circuit oscillant fournissant un signal d'oscillation à une fréquence constante ou à une fréquence variable représentant la mesure d'une grandeur physique, ce signal d'oscillation servant à élaborer un signal de sortie du dispositif intégré et le signal de sortie représentant une base de temps, ou une mesure de grandeur de physique, avec une précision nominale désirée,
   - et un circuit de mesure (31) du facteur de qualité du résonateur configuré pour effectuer une mesure du facteur de qualité pendant une phase de coupure de la boucle d'asservissement,
   **caractérisé en ce que** le dispositif intégré est configuré pour fournir le signal de sortie même pendant la phase de coupure, et **en ce que** le circuit de mesure du facteur de qualité comprend un circuit de séquencement (40) configuré pour limiter à une valeur $T_d$ la durée de la phase de coupure (PB) de la boucle d'asservissement, ladite valeur $T_d$ étant telle qu'à la fin de la phase de coupure, l'amplitude crête du signal d'oscillation est atténuée d'un facteur k inférieur à une valeur limite $k_0$ pour laquelle la base de temps ou la mesure de grandeur physique ne serait plus obtenue avec la précision désirée.

2. Dispositif intégré selon la revendication 1, **caractérisé en ce que** $k_0$ est inférieur ou égal à 2.

3. Dispositif intégré selon l'une des revendications 1 et 2, **caractérisé en ce que** le résonateur est configuré pour recevoir un signal d'excitation (E) fourni par une boucle (20) de contrôle automatique de gain en fonction d'une consigne d'amplitude (C), et pour fournir un signal de sortie y(t) défini par une amplitude crête ayant une valeur nominale $A_0$ fonction de la consigne et d'une fréquence de résonance,
   le signal d'excitation étant coupé par le circuit de séquencement pendant la phase de coupure.

4. Dispositif intégré de mesure suivant la revendication 3, dans lequel le circuit de séquencement (40) est configuré pour provoquer la coupure du signal d'excitation, par forçage à zéro de la consigne d'amplitude (C) de la boucle de contrôle automatique de gain.

5. Dispositif intégré de mesure suivant la revendication 4, dans lequel le circuit de séquencement (40) est configuré pour, à la fin de la durée de coupure Td, appliquer une consigne d'amplitude non nulle, qui est égale à une valeur nominale ($C_0$) ou à une valeur supérieure ($C_1$) à ladite valeur nominale ($C_0$).

6. Dispositif intégré de mesure suivant la revendication 5, dans lequel le circuit de séquencement (40) est configuré pour, à la fin de la durée de coupure $T_d$, appliquer une consigne d'amplitude ayant une valeur supérieure ($C_1$) à ladite valeur nominale ($C_0$), pendant une durée (Tu) sensiblement égale à la durée de coupure $T_d$, ladite valeur de consigne ($C_1$) étant telle que le gain de la boucle de contrôle automatique de gain est le double du gain obtenu pour ladite valeur de consigne nominale, puis ramène la consigne d'amplitude à sa valeur nominale ($C_0$).

7. Dispositif intégré de mesure selon l'une quelconque des revendications précédentes, comprenant des moyens de détection (50) de l'enveloppe p(t) du signal de sortie (y(t)) du micro-système, et des moyens de calcul (31) du facteur de qualité Q à partir de ladite enveloppe sur ladite durée de coupure $T_d$.

8. Dispositif de mesure selon la revendication 6, comprenant des moyens de détection (41) configurés pour détecter la fin de la phase de coupure par comparaison d'un niveau instantané de l'enveloppe à un seuil $A_d$ égal à $A_0/k$.

9. Dispositif de mesure selon l'une quelconque des revendications 3 à 6, comprenant des moyens de détection de pics du signal de sortie (y(t)), configurés pour en estimer l'amplitude crête $A(t_i)$ à un instant $t_i$ correspondant au début de la phase de coupure, et l'amplitude crête $A(t_i+T_d)$ à l'instant $t_i +T_d$, où $T_d$ est la durée de la phase de coupure, précalculée au moyen d'un modèle thermique (33) du facteur de qualité, configuré pour calculer une valeur estimée $\hat{Q}$ du facteur de qualité correspondante, en application de la formule :

$$\hat{Q} = \frac{\omega_0 T_d}{2\ln\left(\dfrac{\hat{A}(t_i)}{\hat{A}(t_i + T_d)}\right)}.$$

**10.** Dispositif de mesure selon l'une des revendications 1 à 8, comprenant des moyens de traitement numérique (50) de l'enveloppe p(t) du signal de sortie du résonateur, lesdits moyens configurés pour calculer une somme $U^2+V^2$, égale au carré de l'enveloppe $\rho^2$ du signal de sortie, où la fonction U représente l'enveloppe (t) et V, la transformée de Hilbert de la fonction U, et des moyens configurés pour calculer un facteur de qualité Q correspondant, par régression linéaire de $\ln(\rho^2)$ sur la durée de coupure $T_d$.

**11.** Dispositif selon la revendication 4, dans lequel la séquence comprenant la coupure (PB) du signal d'excitation pendant la durée $T_d$ puis le rétablissement (PC) du signal d'excitation, est répétée périodiquement.

**12.** Dispositif selon l'une quelconque des revendications précédentes, dans lequel des moyens de calcul supplémentaires (34) sont configurés pour calculer le gain $G_dG_e$ de la boucle d'asservissement en fonction du facteur de qualité mesuré, à partir de l'égalité $G_d.G_e=\omega_0/Q$, où $\omega_0$ est la fréquence de résonance du résonateur en l'absence de contrainte.

**13.** Dispositif selon l'une quelconque des revendications précédentes, comprenant un modèle thermique (32) du facteur de qualité, configuré pour fournir une valeur de température (T') correspondant au facteur de qualité mesuré.

**14.** Procédé de mesure du facteur de qualité d'un résonateur vibrant dans un micro-système comprenant un résonateur à élément(s) vibrant(s) placé dans un circuit oscillant contrôlé par une boucle d'asservissement, le circuit oscillant fournissant un signal d'oscillation à une fréquence constante ou à une fréquence variable représentant la mesure d'une grandeur physique, ce signal d'oscillation servant à élaborer un signal de sortie du dispositif intégré et le signal de sortie représentant une base de temps ou une mesure de grandeur de physique, avec une précision nominale désirée, procédé **caractérisé en ce qu'**on effectue une mesure du facteur de qualité pendant une phase de coupure de la boucle d'asservissement, tout en fournissant le signal de sortie du dispositif intégré, et **en ce qu'**on limite à une valeur $T_d$ la durée de la phase de coupure de la boucle d'asservissement, ladite valeur $T_d$ étant telle qu'à la fin de la phase de coupure, l'amplitude crête du signal d'oscillation est atténuée d'un facteur k inférieur à une valeur limite $k_0$ pour laquelle la base de temps ou la mesure de grandeur physique ne serait plus obtenue avec la précision désirée.

**Patentansprüche**

**1.** Integrierte Vorrichtung, die Folgendes umfasst:

einen Resonator (10) mit (einem) in einer durch einen Regelkreis geregelten oszillierenden Schaltung platzierten vibrierenden Element(en) (11), wobei die oszillierende Schaltung ein Oszillationssignal mit einer konstanten Frequenz oder einer variablen Frequenz liefert, die das Maß für eine physikalische Größe repräsentiert, wobei dieses Oszillationssignal zum Erzeugen eines Ausgangssignals der integrierten Schaltung dient und das Ausgangssignal eine Zeitbasis oder ein Maß für die physikalische Größe mit einer gewünschten Nennpräzision repräsentiert, und eine Schaltung (31) zum Messen des Qualitätsfaktors des Resonators, konfiguriert zum Ausführen einer Messung des Qualitätsfaktors während einer Abschaltphase des Regelkreises, **dadurch gekennzeichnet, dass** die integrierte Vorrichtung zum Liefern des Ausgangssignals sogar während der Abschaltphase konfiguriert ist, und dadurch, dass die Schaltung zum Messes des Qualitätsfaktors eine Sequenzierungsschaltung (40) umfasst, die zum Begrenzen der Dauer der Abschaltphase (PB) des Regelkreises auf einen Wert $T_d$ konfiguriert ist, wobei der Wert $T_d$ derart ist, dass am Ende der Abschaltphase die Spitzenamplitude des Oszillationssignals um einen Faktor k gedämpft wird, der kleiner ist als ein Grenzwert $k_0$, für den die Zeitbasis oder das Maß der physikalischen Größe nicht mehr mit der gewünschten Präzision erhalten würde.

2. Integrierte Vorrichtung nach Anspruch 1, **dadurch gekennzeichnet, dass** $k_0$ gleich oder kleiner als 2 ist.

3. Integrierte Vorrichtung nach einem der Ansprüche 1 und 2, **dadurch gekennzeichnet, dass** der Resonator zum Empfangen eines Anregungssignals (E), das durch einen automatischen Verstärkungsregelkreis (20) in Abhängigkeit von einem Amplitudensollwert (C) geliefert wird, und zum Liefern eines Ausgangssignals y(t) konfiguriert ist, definiert durch eine Spitzenamplitude mit einem Nennwert $A_0$ in Abhängigkeit von dem Sollwert und einer Resonanzfrequenz, wobei das Anregungssignal durch die Sequenzierungsschaltung während der Abschaltphase abgeschaltet wird.

4. Integrierte Messvorrichtung nach Anspruch 3, bei der die Sequenzierungsschaltung (40) zum Hervorrufen des Abschaltens des Anregungssignals konfiguriert ist, indem der Amplitudensollwert (C) des automatischen Verstärkungsregelkreises auf null gezwungen wird.

5. Integrierte Messvorrichtung nach Anspruch 4, bei der die Sequenzierungsschaltung (40) so konfiguriert ist, dass sie am Ende der Abschaltdauer $T_d$ einen Amplitudensollwert von ungleich null anlegt, der gleich einem Nennwert $(C_0)$ oder einem Wert $(C_1)$ über dem Nennwert $(C_0)$ ist.

6. Integrierte Messvorrichtung nach Anspruch 5, wobei die Sequenzierungsschaltung (40) so konfiguriert ist, dass sie am Ende der Abschaltdauer $T_d$ einen Amplitudensollwert $(C_1)$ über dem Nennwert $(C_0)$ während einer Dauer (Tu) im Wesentlichen gleich der Abschaltdauer $T_d$ anlegt, wobei der Sollwert $(C_1)$ derart ist, dass die Verstärkung des automatischen Verstärkungsregelkreises das Zweifache der Verstärkung beträgt, die für den Nenn-Sollwert erhalten wird, und dann der Amplitudensollwert auf seinen Nennwert $(C_0)$ bringt.

7. Integrierte Messvorrichtung nach einem der vorherigen Ansprüche, die Mittel (50) zum Erkennen der Hüllkurve $\rho(t)$ des Ausgangssignals (y(t)) des Mikrosystems und Mittel (31) zum Berechnen des Qualitätsfaktors Q auf der Basis der Hüllkurve über die Abschaltdauer $T_d$ umfasst.

8. Messvorrichtung nach Anspruch 6, die Erkennungsmittel (41) umfasst, die zum Erkennen des Endes der Abschaltphase durch Vergleichen eines momentanen Pegels der Hüllkurve mit einem Schwellenwert $A_d$ gleich $A_0/k$ konfiguriert sind.

9. Messvorrichtung nach einem der Ansprüche 3 bis 6, die Mittel zum Erkennen von Spitzen des Ausgangssignals (y(t)) umfasst, konfiguriert zum Schätzen der Spitzenamplitude $A(t_i)$ zu einem Zeitpunkt $t_i$ entsprechend dem Anfang der Abschaltphase und der Spitzenamplitude $A(t_i+T_d)$ zum Zeitpunkt $t_i + T_d$, wobei $T_d$ die Dauer der Abschaltphase ist, vorberechnet mit Hilfe eines thermischen Modells (33) des Qualitätsfaktors, konfiguriert zum Berechnen eines geschätzten Werte Q des entsprechenden Qualitätsfaktors unter Anwendung der Formel:

$$\hat{Q} = \frac{\omega_0 T_d}{2\ln\left(\dfrac{\hat{A}(t_i)}{\hat{A}(t_i + T_d)}\right)}.$$

10. Messvorrichtung nach einem der Ansprüche 1 bis 8, die Mittel (50) zum digitalen Verarbeiten der Hüllkurve $\rho(t)$ des Ausgangssignals des Resonators umfasst, wobei die Mittel zum Berechnen einer Summe $U^2+V^2$ von gleich dem Quadrat der Hüllkurve $\rho^2$ des Ausgangssignals konfiguriert ist, wobei die Funktion U die Hüllkurve p(t) repräsentiert und V die Hilbert-Transformierte der Funktion U repräsentiert, und Mittel, die zum Berechnen eines entsprechenden Qualitätsfaktors Q durch lineare Regression von $\ln(p^2)$ über die Abschaltdauer $T_d$ konfiguriert sind.

11. Vorrichtung nach Anspruch 4, bei der die Sequenz, die die Abschaltung (PB) des Anregungssignals während der Dauer $T_d$, dann die Wiederherstellung (PC) des Anregungssignals umfasst, periodisch wiederholt wird.

12. Vorrichtung nach einem der vorherigen Ansprüche, wobei die ergänzenden Rechenmittel (34) zum Berechnen der Verstärkung $G_d G_e$ des Regelkreises in Abhängigkeit von dem gemessenen Qualitätsfaktor auf der Basis der Gleichung $G_d . G_e = \omega_0/Q$ konfiguriert ist, wobei $\omega_0$ die Resonanzfrequenz des unbelasteten Resonators ist.

**13.** Vorrichtung nach einem der vorherigen Ansprüche, die ein thermisches Modell (32) des Qualitätsfaktors umfasst, konfiguriert zum Liefern eines Temperaturwertes (T'), der dem gemessenen Qualitätsfaktor entspricht.

**14.** Verfahren zum Messen des Qualitätsfaktors eines vibrierenden Resonators in einem Mikrosystem, das einen Resonator mit (einem) vibrierenden Element(en) umfasst, platziert in einer durch einen Regelkreis geregelten oszillierenden Schaltung, wobei die oszillierende Schaltung ein Oszillationssignal mit einer konstanten Frequenz oder mit einer variablen Frequenz liefert, die das Maß für eine physikalische Größe repräsentiert, wobei dieses Oszillationssignal zum Erzeugen eines Ausgangssignals der integrierten Vorrichtung dient und wobei das Ausgangssignal eine Zeitbasis oder ein Maß für eine physikalische Größe mit einer gewünschten Nennpräzision repräsentiert, wobei das Verfahren **dadurch gekennzeichnet ist, dass** es eine Messung des Qualitätsfaktors während einer Abschaltphase des Regelkreises bewirkt, unter Lieferung des Ausgangssignals der integrierten Schaltung, und dadurch, dass die Dauer der Abschaltphase des Regelkreises auf einen Wert $T_d$ begrenzt wird, wobei der Wert $T_d$ derart ist, dass am Ende der Abschaltphase die Spitzenamplitude des Oszillationssignals um einen Faktor k gedämpft wird, der kleiner ist als ein Grenzwert $k_0$, für den die Zeitbasis oder das Maß für die physikalische Größe nicht mehr mit der gewünschten Präzision erhalten würde.

**Claims**

**1.** An integrated device comprising
a resonator (10) with vibrating element(s) (11) placed in an oscillating circuit controlled by a servo-loop, the oscillating circuit providing an oscillation signal at a constant frequency or at a variable frequency representing the measurement of a physical quantity, this oscillation signal serving to formulate an output signal of the integrated device and the output signal representing a time base or a measurement of the physical quantity, with a desired nominal precision, and a circuit (31) for measuring the quality factor of the resonator configured to perform a measurement of the quality factor during a phase of cut-off of the servo-loop,
**characterised in that** the integrated device is configured to provide the output signal, even during the cut-off phase, and **in that** the circuit for measuring the quality factor comprises a sequencing circuit (40) configured to limit to a value $T_d$ the duration of the cut-off phase (PB) of the servo-loop, said value $T_d$ being such that at the end of the cut-off phase, the peak amplitude of the oscillation signal is attenuated by a factor k that is less than a limit value $k_0$ for which the time base or the measurement of the physical quantity would no longer be obtained with the desired precision.

**2.** The integrated device according to Claim 1, **characterised in that** the $k_0$ is less than or equal to 2.

**3.** The integrated device according to either of Claims 1 and 2, **characterised in that** the resonator is configured to receive an excitation signal (E) provided by a loop (20) for automatic gain control as a function of an amplitude setpoint (C) and to provide an output signal y(t) defined by a peak amplitude having a nominal value $A_0$ dependent on the setpoint and on a resonant frequency, the excitation signal being cut off by the sequencing circuit during the cut-off phase.

**4.** The integrated measurement device according to Claim 3, wherein the sequencing circuit (40) is configured to cause the cut-off of the excitation signal by forcing the amplitude setpoint (C) of the automatic gain control loop to zero.

**5.** The integrated measurement device according to Claim 4, wherein the sequencing circuit (40) is configured to apply, at the end of the duration of cut-off $T_d$, a non-zero amplitude setpoint which is equal to a nominal value ($C_0$) or to a greater value ($C_1$) than said nominal value ($C_0$).

**6.** The integrated measurement device according to Claim 5, wherein the sequencing circuit (40) is configured to apply, at the end of the duration of cut-off $T_d$, an amplitude setpoint having a greater value ($C_1$) than said nominal value ($C_0$), for a duration (Tu) substantially equal to the duration of cut-off $T_d$, said setpoint value ($C_1$) being such that the gain of the automatic gain control loop is double the gain obtained for said nominal setpoint value, and then restores the amplitude setpoint to its nominal value ($C_0$).

**7.** The integrated measurement device according to any of the preceding claims, comprising means (50) for detecting the envelope $\rho(t)$ of the output signal (y(t)) of the micro-system, and means (31) for calculating the quality factor Q on the basis of said envelope over said duration of cut-off $T_d$.

8. The measurement device according to Claim 6, comprising detection means (41) configured to detect the end of the cut-off phase by comparing an instantaneous level of the envelope with a threshold $A_d$ equal to $A_0/k$.

9. The measurement device according to any of 3 to 6, comprising means for detecting spikes of the output signal (y(t)) configured to estimate the peak amplitude $A(t_i)$ thereof at an instant $t_i$ corresponding to the start of the cut-off phase, and the peak amplitude $A(t_i+T_d)$ at the instant $t_i+T_d$, where $T_d$ is the duration of the cut-off phase, precalculated by means of a thermal model (33) of the quality factor, configured to calculate an estimated value $\hat{Q}$ of the corresponding quality factor, by applying the formula:

$$\hat{Q} = \frac{\omega_0 T_d}{2 \ln\left(\frac{\hat{A}(t_i)}{\hat{A}(t_i + T_d)}\right)}.$$

10. The measurement device according to any of Claims 1 to 8, comprising means of digital processing (50) of the envelope p(t) of the output signal of the resonator, said means being configured to calculate a sum $U^2+V^2$, equal to the square of the envelope $\rho^2$ of the output signal, where the function U represents the envelope p(t) and V, the Hilbert transform of the function U, and means configured to calculate a corresponding quality factor Q, by linear regression of $1n(\rho^2)$ over the duration of cut-off $T_d$.

11. The device according to Claim 4, wherein the sequence comprising the cut-off (PB) of the excitation signal for the duration $T_d$ and then the restoral (PC) of the excitation signal, is repeated periodically.

12. The device according to any of the preceding claims, wherein additional calculation means (34) are configured to calculate the gain $G_d G_e$ of the servo-loop as a function of the measured quality factor, on the basis of the equality $G_d.G_e=\omega_0/Q$, where $\omega_0$ is the resonant frequency of the resonator in the absence of stress.

13. The device according to any of the preceding claims, comprising a thermal model (32) of the quality factor, configured to provide a temperature value (T') corresponding to the measured quality factor.

14. A method for measuring the quality factor of a vibrating resonator in a micro-system comprising a resonator with vibrating element(s) placed in an oscillating circuit controlled by a servo-loop, the oscillating circuit providing an oscillation signal at a constant frequency or at a variable frequency representing the measurement of a physical quantity, this oscillation signal serving to formulate an output signal of the integrated device and the output signal representing a time base or a measurement of a physical quantity, with a desired nominal precision, the method being **characterised in that** a measurement of the quality factor is performed during a phase of cut-off of the servo-loop, while providing the output signal of the integrated device, and **in that** the duration of the servo-loop cut-off phase is limited to a value $T_d$, said value $T_d$ being such that at the end of the cut-off phase, the peak amplitude of the oscillation signal is attenuated by a factor k that is less than a limit value $k_0$ for which the time base or the measurement of a physical quantity would no longer be obtained with the desired precision.

**Fig. 1**

**Fig. 2a**

**Fig. 2b**

**Fig. 3**

## Fig. 4a

## Fig. 4b

## Fig. 5

## Fig.6

# Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0215599
- FR 9202189
- EP 0557216 A

- FR 0507144
- EP 1831663 A
- EP 1995575 A

**Littérature non-brevet citée dans la description**

- **HERVÉ MATHIAS et al.** Architecture for integrated mems resonators quality factor measurement. *symposium DTIP (pour Design, Test, Integration and Packaging),* 25 Avril 2007, ISBN 978-2-35500-000-3